**Europäisches Patentamt**

**European Patent Office**

**Office européen des brevets**

(19)

(11) Publication number: **0 016 597**
**A1**

(12)

# EUROPEAN PATENT APPLICATION

(21) Application number: **80300729.3**

(22) Date of filing: **10.03.80**

(51) Int. Cl.³: **G 01 S 13/24**

(30) Priority: **17.03.79 GB 7909465**

(43) Date of publication of application:
**01.10.80 Bulletin 80.20**

(84) Designated Contracting States:
**BE DE FR IT NL**

(71) Applicant: **THE MARCONI COMPANY LIMITED**
**Marconi House New Street**
**Chelmsford Essex CM1 1PL(GB)**

(72) Inventor: **Glasgow, John Arthur**
**30, Johnson Road**
**Great Baddow Chelmsford, Essex(GB)**

(74) Representative: **Tolfree, Roger**
**The Marconi Company Limited Marconi House New Street**
**Chelmsford, CM1 1PL(GB)**

(54) **A pulse radar system.**

(57) It has previously been known to construct a radar system so that it transmits long pulses and short pulses. The long pulses, which may be subject to pulse compression, are used, because of their high energy, to detect objects at long range whilst the short pulses, because of their good resolution, are used to detect objects at short range. This known technique suffers from the disadvantage of requiring an exceedingly expensive transmitting and receiving system.

A transmitter (13) is controlled by unit (14) to produce pulses at T. The frequency of each pulse is changed so as to divide it into two consecutive signals of different frequencies. These consecutive signals are of different duration and are used, as before, for long range and short range detection respectively.

The receiver (19) has a local oscillator (18) whose frequency is also changed so as to make the receiver responsive to the long and short signals when radar returns are expected from long and short ranges.

In an alternative embodiment two separate receivers are used.

EP 0 016 597 A1

Croydon Printing Company Ltd.

ANTENNA ～15

T

TRANSMITTER ～13    A    B

T R CELL ～16

T'

MIXER ～17

LOCAL OSCILLATOR ～18    E

SWITCHING UNIT ～14

RECEIVER ～19    F

LONG RANGE DISPLAY ～20

SHORT RANGE DISPLAY ～21

FIG.2.

0016597

## A PULSE RADAR SYSTEM

This invention relates to a pulse radar system which transmits long and short signals and incorporates a receiver which utilises information from the long signals when they have been reflected from distant objects; and from the short signals when they have been reflected from near objects. The advantage of using short and long signals in this way is that the short signals give better resolution whilst the long signals have a higher energy and are therefore better for detecting objects at long ranges.

One such system is described in our U.K. Patent Specification 1424026. This system uses pulse compression on the long signals and gives the advantage of enabling the operator, e.g. on a ship, to obtain early warning of impending hazards at say twenty or more miles and, at the same time, to observe objects in the immediate vicinity. A disadvantage of this known system is its cost; which precludes its use in at least the commercial marine radar market.

This invention provides a radar system comprising transmitting means for transmitting long signals and short signals having respective different frequency characteristics and frequency discriminating receiving means adapted to receive and distinguish between the long and short signals respectively.

The "different frequency characteristics" may simply be different frequencies. However other possibilities are practicable. For example, the longer signals could be frequency swept to effect pulse compression.

When the signals are simply of two different discrete frequencies the receiving means can of course include two separate receivers tuned to the respective frequencies so that one receiver responds to the long signals whilst the other receiver responds to the short signals

This duplication of receivers can be avoided in a preferred system where the receiving means is controlled by a timing system. The timing system makes the receiving means responsive to: the frequency of the short signal for a predetermined time period after transmission of that short signal; and to the frequency of the long signal after the said time period. In this way the receiver is made to respond to the short signals only when they have been reflected from nearby objects; and to the long signals only when they have been reflected from distant objects.

The transmitting means is preferably adapted to transmit a long signal and a short signal consecutively so as to provide a two-frequency pulse.    This can easily be effected using a multipactor magnetron which is a type of magnetron whose frequency can readily be changed.

Particular embodiments of the invention will now be described, by way of example, with reference to the accompanying drawings in which:-

Figure 1   is a very schematic block diagram showing a radar system constructed in accordance with the invention;

Figure 2   is a diagram, similar to that of Figure 1, showing an alternative embodiment of the invention;    and

Figure 3   is a pulse diagram showing the timing of signals at the positions marked A, B, T T', E and F on Figure 2 with C and D on Figure 1.

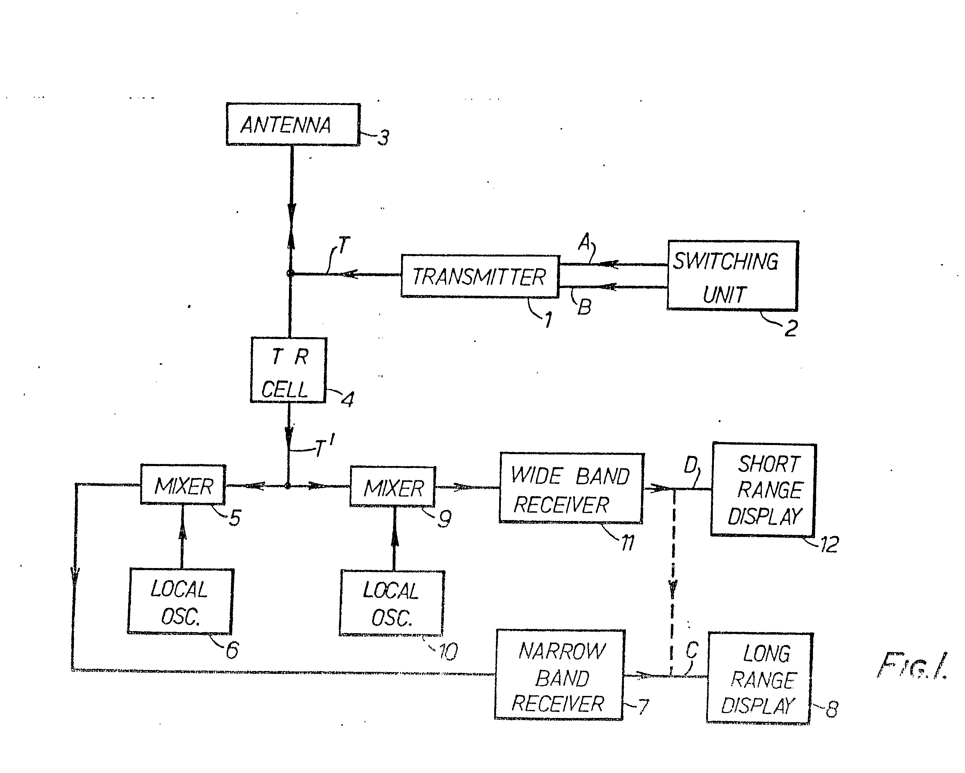

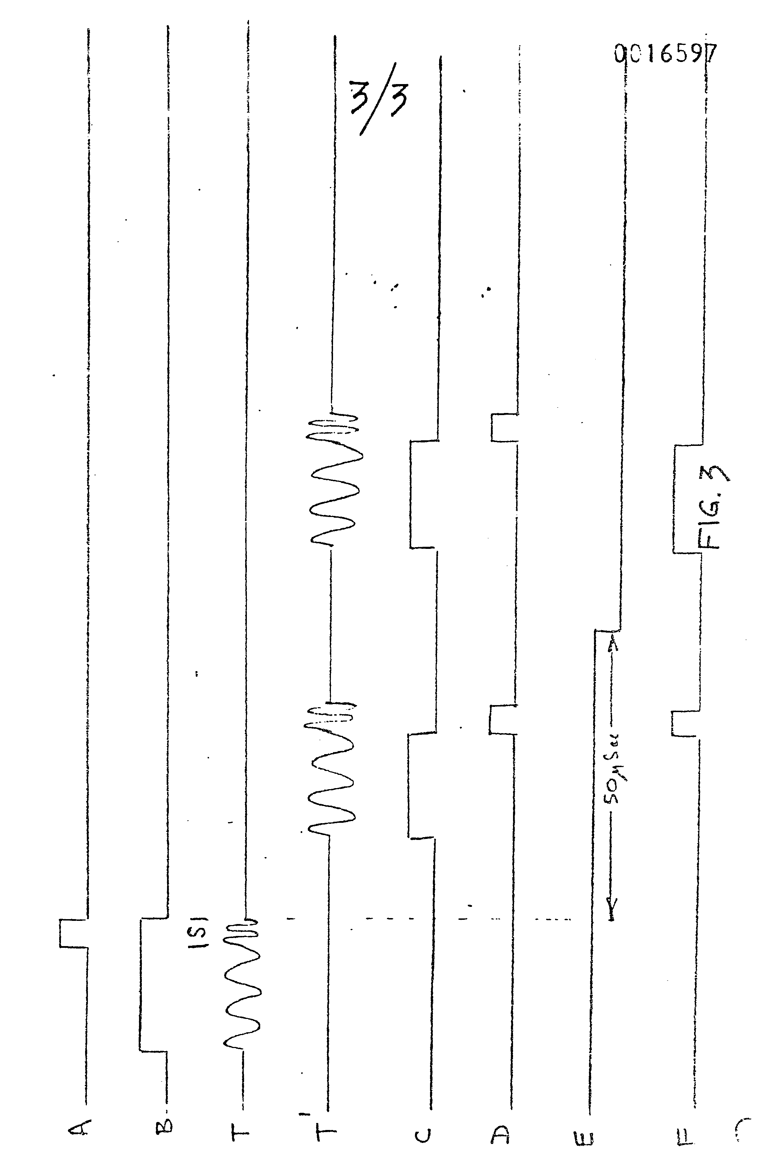

Referring firstly to Figure 1 there is shown a radar transmitter 1 incorporating a multipactor magnetron enabling the transmitter to transmit pulses the first part of which is of one frequency and the second part of which is of another frequency.    The transmitter 1 is controlled by a switching unit  2  having two outputs A and B which are fed to the transmitter.    The outputs A and B are shown schematically on Figure 3 (which is not drawn to scale). The pulses B are of one microsecond duration and occur at a pulse repetition period of 1,000 microseconds. These pulses B cause the transmitter 1 to transmit signals from its output.    The pulses A also occur every 1,000 microseconds and define a 0.1 microsecond period at the end of each pulse B.   This 0.1 microsecond period is indicated by the reference S on Figure 3.    The pulses A are applied to the multipactor electrode of the magnetron and serve to raise the frequency of the transmitted pulses during the 0.1 microsecond period at the end of each transmitted pulse.   It is pointed out that, in an alternative system the pulses A could serve to lower, instead of to raise, the frequency of the transmitted pulses.   Thus, each transmitted pulse can be considered to be formed by two consecutive signals of different frequencies, the first signal being longer than the second signal and shown as T in Fig. 3.

The pulses are transmitted from an antenna 3 which also receives the pulses after being reflected from objects at various distances.. The received signal is passed through a transmit/receive cell 4, the purpose of which is to isolate the receiving circuitry from the transmitter.

The output from the transmit/receive cell 4 is shown schematically at T' on Figure 3.   The signal T' includes two pulses each similar to the pulse T, and derived from reflections thereof from close range and long range objects respectively. The output pulses T' from the cell 4 are fed to a mixer 5 where the received signals are mixed with a signal from a local oscillator 6, the latter being tuned to a frequency which is correct for the frequency transmitted during the first part of each pulse.   The output from the mixer 5 is fed to a narrow band receiver 7 which is tuned so that it only responds to signals from the mixer 5 of a frequency resulting from the first, lower frequency, part of a received pulse.   The output of the receiver 7 is fed to a display system 8.

The output of the transmit/receive cell 4 is also fed to a second mixer 9 where it is mixed with a signal from a local oscillator 10. The frequency of the local oscillator 10 is tuned to a value appropriate for the second part of each transmitted pulse. The output of the mixer 9 is fed to a wide band receiver 11 tuned to respond only to those signals from the mixer 9 derived from the second part of each pulse. The output of the receiver 11 is fed to a display 12.

Because the receiver 7 receives only the relatively long signals it is well suited to long range observation of objects. These are therefore indicated clearly on the display 8. Because the receiver 11 receives only the relatively short signals, its output is particularly well adapted to the observation of short range objects, these being indicated clearly on the display 12. By keeping watch on both displays 8 and 12 the operator can thus obtain a good indication of what hazards may be present at all ranges.

If desired the information available on the short range display 12 could also be shown on the long range display 8. Such an arrangement is illustrated schematically by the broken line on Fig. 1.

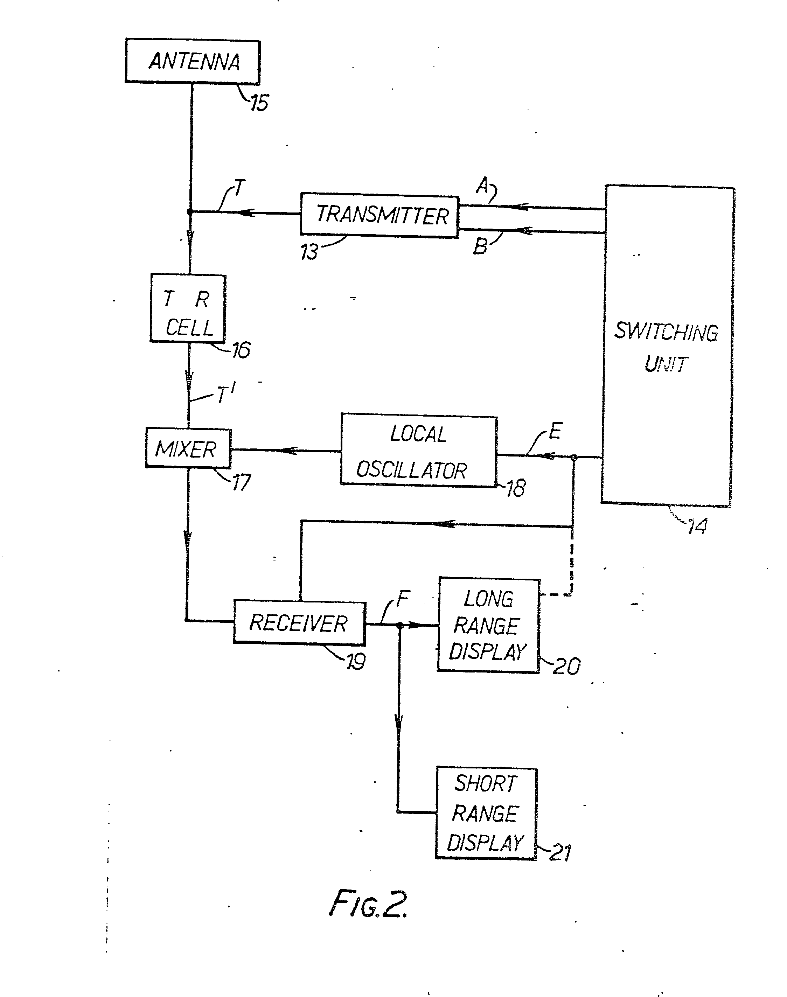

The alternative arrangements shown in Figure 2 incorporates a transmitter 13 similar to that shown at 1 on Figure 1. The transmitter 13 receives signals A and B from switching unit 14, these signals A and B being the same as those shown on Figure 3. The output of the transmitter 13 is fed to an antenna 15 from which the pulses, each having two parts of different frequencies, are transmitted over an area under observation.

A transmit/receive cell 16, similar to that shown at 4 on Figure 1, isolates the transmitting circuitry from the receiving circuitry and the output of the cell 16 is the same as that shown at T' on Figure 3 assuming that echo signals are received from a close range and a far range object in a similar fashion as described with reference to Figure 1. The signals T' are mixed, in a mixer 17, with a signal from a local oscillator 18. The frequency of the local oscillator 18 is controlled by a signal shown at E on Figure 3. This signal E has a trailing edge which defines a period of 50 microseconds after the transmission of each pulse. During this 50 microsecond period, when echos are being received from objects at close range, the signal E causes the local oscillator 18 to operate at a relatively low frequency such that, when mixed with the low frequency part of the pulses T' it produces an intermediate frequency which is within the frequency band to which a receiver 19 is tuned. After the 50 microsecond period, when echo pulses are being received from long range objects, the signal E is at a low level, which causes the oscillator 18 to operate at an appropriate frequency for the high frequency signal echoes. Consequently, when the output from local oscillator 18 is mixed with the high frequency part of the signals T', in the mixer 17; the same intermediate frequency, to which the receiver 19 is tuned, is produced at the output of the mixer 17.

The output of the receiver 19 is shown at F on Figure 3 from which it will be seen that the effect of the aforementioned circuitry is to receive the short, relatively high frequency part of each echo pulse when that pulse is received within the 50 microsecond period after transmission; and to receive the long, relatively low frequency part of each pulse when it is received after the 50 microsecond period.

The output F of the receiver is fed to a long range display system 20 and to a short range display system 21. An optional feature of the embodiment shown in Figure 2 is the provision of means, indicated by the broken line, for feeding the signal E to the long range display 20 so as to render it disoperative for displaying short range signals. It is also to be noted that the signal E is fed to the receiver 19 to change its bandwidth when receiving the short signals and long signals respectively.

It will be appreciated that the foregoing description of the two illustrated embodiments of the invention have been given only for the purpose of showing how the invention can be put into effect. There are many other possibilities. For example, it may be advantageous to apply pulse compression techniques to the longer part of each pulse. It would also be possible, instead of dividing each pulse into two signals of long and short duration respectively, to arrange for the transmitter to generate alternately at spaced intervals long and short pulses of different frequencies.

CLAIMS:-

1.      A radar system comprising transmitting means for transmitting long signals (B) and short signals (A) having respective different frequency characteristics and characterised by frequency discriminating receiving means (5 to 12 or 17 to 21) adapted to receive and distinguish between the long and short signals respectively and to use both said long and short signals to indicate the positions of targets from which the signals are reflected.

2.      A radar system according to claim 1 characterised in that the receiving means is controlled by timing means (14) which makes it responsive to; a frequency associated with a said short signal for a pre-determined time period after transmission of that short signal and to a frequency associated with the long signal after said time period, whereby the receiving means uses the long signals to indicate the positions of relatively distant targets and the short signals to indicate the positions of relatively close targets.

3.      A radar system according to claim 1 characterised in that the receiving means includes two receivers (7, 11) tuned to the respective frequencies.

4.      A radar system according to claim 1, 2 or 3 characterised in that the transmitting means 1 is adapted to transmit a long and a short signal consecutively so as to provide a two frequency pulse.

Fig.1.

FIG.2.

FIG. 3

European Patent Office

EUROPEAN SEARCH REPORT

Application number

EP 80 30 0725.3

| Category | Citation of document with indication, where appropriate, of relevant passages | Relevant to claim |
|---|---|---|
| | US - A - 3 945 011 (J.A. GLASGOW) <br> * Fig. 1 and 2 * <br> -- | 1 |
| | DE - A - 2 410 500 (THOMSON-CSF) <br> * Fig. 1 to 4 * <br> -- | 2,4 |
| A | GB - A - 1 424 392 (SIEMENS AG) <br> * Fig. 1 * <br> -- | |
| A,P | DE - A1 - 2 912 342 (INTERNATIONAL STANDARD ELECTRIC CORP.) <br> * Fig. 1 to 8 * <br> -- | |
| A | DE - A1 - 2 749 497 (HOLLANDSE SIGNAALAPPARATEN) <br> * Fig. 1 * <br> -- | |
| A | DE - B2 - 2 316 496 (MESSERSCHMITT-BÖLKOW-BLOHM GMBH) <br> * Fig. 1 * <br> ---- | |

## DOCUMENTS CONSIDERED TO BE RELEVANT

CLASSIFICATION OF THE APPLICATION (Int. Cl.)

G 01 S 13/24

TECHNICAL FIELDS SEARCHED (Int.Cl.)

G 01 S 7/00
G 01 S 13/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 24-06-1980 | BREUSING |

EPO Form 1503.1   06.78

BAD ORIGIN